# EUROPÄISCHE PATENTANMELDUNG

(11) **EP 1 205 692 A2**
(43) Veröffentlichungstag der Anmeldung: **15.05.2002**
(21) Anmeldenummer: 01123012.5
(22) Anmeldetag: 26.09.2001
(51) Int. Cl.: F16H 63/20, F16H 63/30

(54) **Schalteinrichtung für ein mehrgängiges Zahnräderwechselgetriebe**

(30) Priorität: 09.11.2000 DE 10055593
(71) Anmelder: INA Wälzlager Schaeffler oHG, 91074 Herzogenaurach (DE)
(72) Erfinder: Schübel, Rainer, 91589 Aurach (DE); Linnenbrink, Ulrich, 10015 Ivrea (IT)

(57) **Zusammenfassung**

Die Schalteinrichtung für ein mehrgängiges Zahnräderwechselgetriebe eines Kraftfahrzeuges zeichnet sich dadurch aus, dass im geschalteten Zustand der Schaltfinger (5) in der Aufnahmeöffnung (6) des Mitnehmers (7, 20, 21) beidseitig anliegt, wobei der Schaltfinger (5) wenigstens einen durch ein Federelement (44, 45, 37, 40) erzeugten angefederten Kontakt (36) aufweist.

## Beschreibung

### Anwendungsgebiet der Erfindung

Die Erfindung betrifft eine Schalteinrichtung für ein mehrgängiges Zahnräderwechselgetriebe eines Kraftfahrzeuges, bei der eine längsverschieblich und/oder schwenkbar in einem Getriebegehäuse aufgenommene Schaltwelle über einen mit ihr verbundenen Schaltfinger in eine Aufnahmeöffnung eines Mitnehmers einer längsverschieblichen Schaltstange eingreift, auf der eine Schaltgabel angeordnet ist, die mit einer Schiebemuffe in Wirkverbindung steht.

### Hintergrund der Erfindung

Derartige Schalteinrichtungen für Zahnräderwechselgetriebe sind schon seit langem bekannt. Eine solche Einrichtung ist beispielsweise in der DE 195 80 804 C1 beschrieben. In einem Getriebegehäuse eines Schaltgetriebes ist in Lagern eine Schaltwelle in Richtung ihrer Achse verschieblich und in Umfangsrichtung um diese Achse schwenkbar beweglich angeordnet. Auf der Schaltwelle ist eine Rastierhülse befestigt. Um die einzelnen Stellungen der Schaltwelle zu sichern, ist die Rastierhülse mit entsprechenden Rastausnehmungen versehen, in die Rastkugeln einer Kugelarretierung eingreifen. Die

Kugelarretierung ist ortsfest im Getriebegehäuse angeordnet. Der Schaltfinger der Rastierhülse wiederum greift in eine Aufnahmeöffnung einer längsverschieblichen Schaltstange ein, so dass mit Hilfe von an der Schaltstange befestigten Schaltgabeln über Schiebemuffen einzelne Zahnräder des Getriebes schaltbar sind.

Nachteilig dabei ist, dass vom Antriebsstrang ausgehende resonanzabhängige Schwingungen über den Kontakt von Schaltfinger und Aufnahmeöffnung des Mitnehmers auf die Schaltwelle übertragen werden. Der Antriebsstrang ist dabei als ein schwingungsfähiges System zu betrachten, dessen einzelne Komponenten unterschiedliche Massen, Steifigkeiten und Dämpfungen aufweisen. Derartige Schwingungen, die sich beispielsweise als unerwünschte Klirrgeräusche, Klappern, Rasseln oder Vibrationen am Schafthebel im Innenraum eines Kraftfahrzeuges bemerkbar machen, setzen den Komfort herab. Unter Komfort soll im erfindungsgemäßen Sinne das subjektive Wohlbefinden eines Fahrzeuginsassen in einem Kraftfahrzeug sein, das im wesentlichen durch Schwingungen beeinträchtigt wird, die nach Frequenz, Effektivwert, Dauer, Richtung und Ort der Einwirkung zu unterscheiden sind.

### Zusammenfassung der Erfindung

Der Erfindung liegt daher die Aufgabe zu Grunde, den Komfort einer Schalteinrichtung für ein mehrgängiges Zahnräderwechselgetriebe zu erhöhen.

Erfindungsgemäß wird diese Aufgabe nach dem kennzeichnenden Teil von Anspruch 1 dadurch gelöst, dass im geschalteten Zustand der Schaltfinger in der Aufnahmeöffnung des Mitnehmers beidseitig anliegt, wobei der Schaltfinger wenigstens einen durch ein elastisches Federelement erzeugten angefederten Kontakt aufweist.

Durch diese erfindungsgemäße Maßnahme wird erreicht, dass Schwingungen, die sich durch die vorstehend beschriebenen unerwünschten Geräusche bemerkbar machen, gedämpft werden, wobei unter Dämpfung in bekannter Weise die Umwandlung periodisch zugeführter Energie in eine andere Energieform zu verstehen ist. Diese Geräusche werden durch Torsionsschwingungen des Getriebestranges verursacht. Aber auch Synchronringe, Schiebemuffen, Schaltgabeln können ebenfalls zu Schwingungen angeregt werden. Durch den angefederten Kontakt des Schaltfingers in der Aufnahmeöffnung des Mitnehmers der Schaltstange wird im geschalteten Zustand durch Verspannung der beteiligten Partner das Spiel eliminiert und somit die Kette der Weiterleitung der sich ausbreitenden Schwingungen an dieser Stelle unterbrochen, d. h. ein verbesserter Komfort der Schaltung erreicht. Schwingungen, die beispielsweise von der Schiebemuffe auf die Schaltgabel treffen, können nun keine Geräusche mehr durch einen ständig wechselnden Kontakt am Schaltfinger erzeugen.

Vorteilhafte Weiterbildungen der Erfindung sind in den Ansprüchen 2 bis 9 beschrieben.

Aus Anspruch 2 geht hervor, dass der Schaltfinger einen Festkontakt und einen angefederten Kontakt oder zwei angefederte Kontakte aufweisen soll.

Nach einem weiteren Merkmal der Erfindung gemäß Anspruch 3 ist vorgesehen, dass das Federelement im Bereich des Schaltfingers angeordnet sein soll, wobei für die Gestaltung des Federelementes die unterschiedlichsten Ausführungsvarianten vorstellbar sind:

Nach Anspruch 4 soll der Schaltfinger mit wenigstens einer durchgehenden Bohrung versehen sein, in der zwei durch eine Feder voneinander beabstandete gegeneinander verschiebbare Kugeln angeordnet sind, wobei im äußeren Bereich des Schaltfingers der Durchmesser der Bohrung geringer als der Durchmesser der Kugeln ist und die Bohrung innerhalb des Schaltfingers so angeordnet ist, dass im geschalteten Zustand eine der Kugeln an einer Wandung der Aufnahmeöffnung anliegt. In diesem Fall ist die Anlage des Schaltfingers in der Aufnahmeöffnung durch einen Festkontakt und durch einen angefederten Kontakt realisiert.

Nach einem anderen Merkmal der Erfindung gemäß Anspruch 5 soll der Schaltfinger mit zwei übereinander angeordneten durchgehenden Bohrungen versehen sein, in denen zwei durch eine Feder voneinander beabstandete gegeneinander verschiebbare Kugeln angeordnet sind, wobei im äußeren Bereich des Schaltfingers der Durchmesser der Bohrungen geringer als der Durchmesser der Kugeln ist und die Bohrungen innerhalb des Schaltfingers so angeordnet sind, dass im geschalteten Zustand je eine der Kugeln an je einer Wandung der Aufnahmeöffnung anliegt. In diesem Fall sind beide Anlagepunkte des Schaltfingers in der Aufnahmeöffnung durch angefederte Kontakte realisiert.

Eine weitere Ausführungsvariante ist im Anspruch 6 offengelegt. Danach soll das Federelement im Querschnitt gesehen U-förmig ausgebildet sein, wobei ein auf den Schaltfinger aufgestecktes Basisteil zwei den Schaltfinger zumindest teilweise umschließende Schenkel verbindet, von denen einer im geschalteten Zustand an einer Wandung der Aufnahmeöffnung anliegt. Auch hier ist es so, dass ein Anlagepunkt ein Festkontakt und der andere ein angefederter Kontakt ist.

Nach einem zusätzlichen weiteren Merkmal der Erfindung gemäß Anspruch 7 soll der Schaltfinger mit einer umlaufenden Nut versehen sein, in die ein O-Ring eingesetzt ist. Hier ist in besonders einfacher Weise wiederum sichergestellt, dass ein Kontakt des Schaltfingers in der Aufnahmeöffnung durch einen Festkontakt und der andere durch einen angefederten realisiert ist.

Im Anspruch 8 ist eine andere Anordnung des Federelementes beschrieben. Danach soll dieses außerhalb des Bereiches des Schaltfingers angeordnet sein.

Eine Ausführungsvariante dieser Anordnungsart geht aus Anspruch 9 hervor, danach soll das Federelement auf eine mit der Schaltwelle verbundene Schalthülse aufgesteckt sein und aus einem einen Teil der Rastierhülse umschließenden halbkreisförmigen Basisteil sowie zwei davon abgewinkelten Schenkeln bestehen, von denen einer im geschalteten Zustand an einem Nachbarbereich der Aufnahmeöffnung anliegt. Auch diese Art der Federanordnung sorgt dafür, dass ein anliegender Kontakt des Schaltfingers in der Aufnahmeöffnung gegeben ist, wobei dieser wiederum einerseits durch einen Festkontakt und andererseits durch einen angefederten Kontakt realisiert ist.

Die Erfindung wird an nachstehenden Ausführungsbeispielen näher erläutert.

### Kurze Beschreibung der Zeichnungen

Es zeigen:
- Figuren 1, 2, 3 u. 4: je einen Schnitt im Bereich des Schaltfingers einer Schalteinrichtung mit unterschiedlichen Ausführungsvarianten von dessen Halterung in der Aufnahmeöffnung eines Mitnehmers einer Schaltstange, wobei mit a der ungeschaltete und mit b der geschaltete Zustand dargestellt ist,
- Figur 5: einen Längsschnitt durch eine komplette Schalteinrichtung für ein mehrgängiges Zahnräderwechselgetriebe nach dem bisherigen Stand der Technik.

### Ausführliche Beschreibung der Zeichnungen

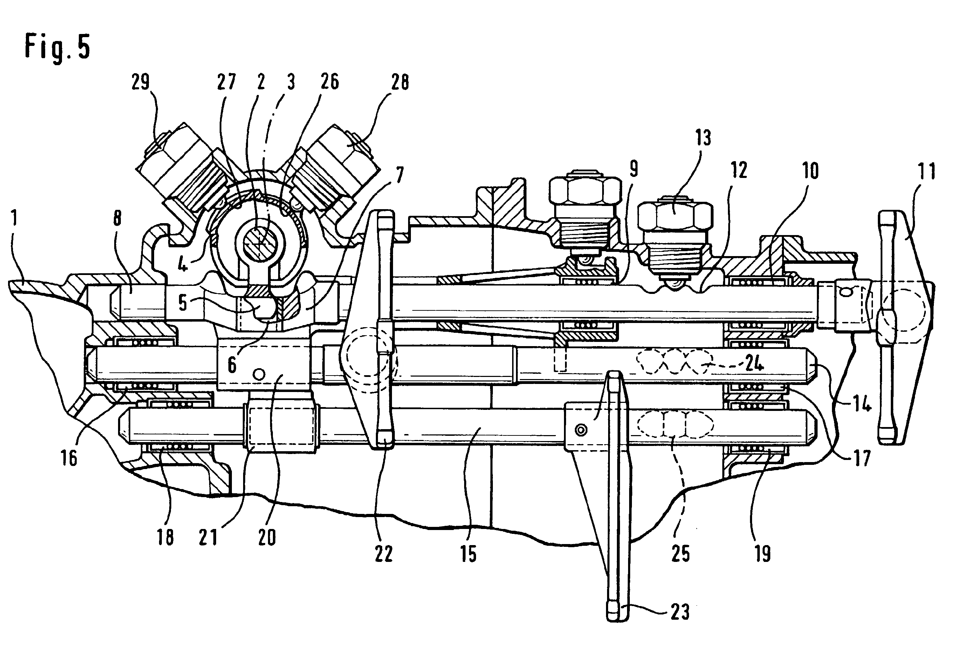

Das in Figur 5 nach dem Stand der Technik gezeigte Handschaltgetriebe besteht im wesentlichen aus dem Getriebegehäuse 1, in dem die Schaltwelle 2 in Richtung ihrer Achse 3 längsverschieblich und um ihre Achse 3 schwenkbar über nicht sichtbare Lager gehalten ist. Die Schaltwelle 2 ist mit der Rastierhülse 4 verbunden, deren Schaltfinger 5 in die Aufnahmeöffnung 6 des Mitnehmers 7 eingreift. Der Mitnehmer 7 ist wiederum fest mit der Schaltstange 8 verbunden, die über wälzgelagerte Längsführungen 9, 10 im Getriebegehäuse 1 gelagert ist. Auf der Schaltwelle 8 ist weiter die Schaltgabel 11 befestigt, die über eine nicht gezeigte Schiebemuffe mit den ebenfalls nicht dargestellten schaltbaren Zahnrädern in Wirkverbindung steht. Zur Fixierung ist die Schaltstange 8 mit der Rastkontur 12 versehen, in die die Kugelarretierung 13 eingreift. Weitere Schaltstangen 14 und 15 sind über weitere Längsführungen 16, 17, 18 und 19 im Getriebegehäuse 1 gelagert, wobei diese ebenfalls weitere Mitnehmer 20, 21 und Schaltgabeln 22, 23 sowie Rastkonturen 24, 25 aufweisen. Die mit der Schaltwelle 2 verbundene Rastierhülse 4 weist an ihrer Mantelfläche ebenfalls zwei Rastkonturen 26 und 27 auf, in die die Kugelarretierungen 28 und 29 eingreifen, so dass die Schaltwelle 2 im geschalteten Zustand sowohl in Längs- als auch in Umfangsrichtung gegen Verschieben gesichert ist. Beim Längsverschieben der Schaltwelle 2 wird eine Aufnahmeöffnung eines Mitnehmers 7, 20, 21 einer Schaltstange 8, 14, 15 angewählt und durch Verdrehen der Schaltwelle 2 der gewünschte Gang geschaltet.

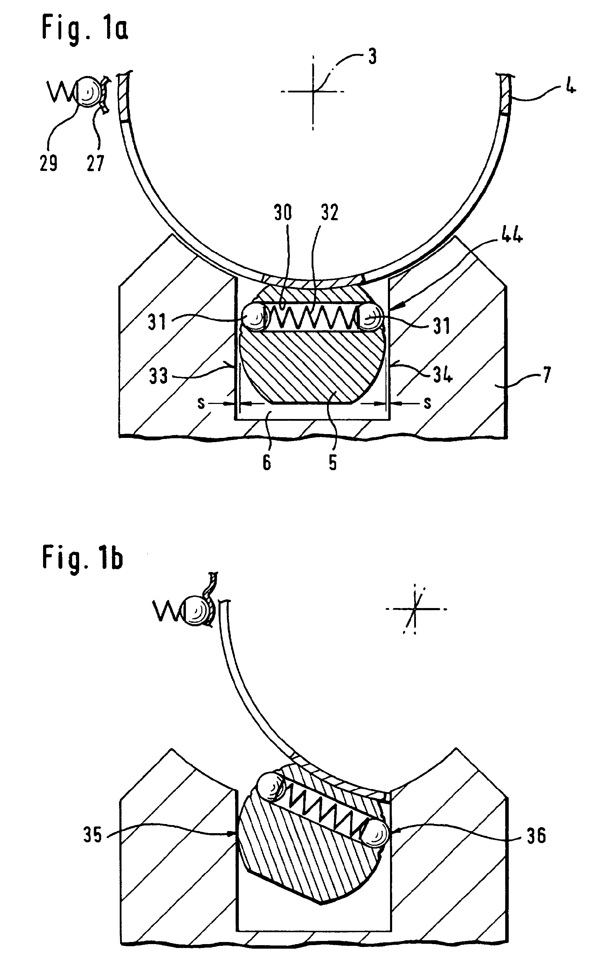

Die nachstehenden Ausführungen anhand der Figuren 1 bis 4 sind unter der Voraussetzung gemacht, dass die Schaltwelle 2 beim Wählvorgang durch eine Längsverschiebung in Richtung ihrer Achse 3 in die Ausnehmung 6 des Mitnehmers 7 eingreift, der mit der Schaltwelle 8 verbunden ist. Das Anwählen des Ganges sollte dabei so erfolgen, dass der Schaltfinger 5 in die Aufnahmeöffnung 6 des Mitnehmers 7 so eingeführt wird, dass rechts- und linksseitig ein Spalt s verbleibt. Das Schalten des gewünschten Ganges erfolgt dann durch Drehen der Schaltwelle 2 in Uhrzeigerrichtung, wobei die Kugelarretierung 29 mit ihrer Rastkontur 27 für die sichere Positionierung der Schaltwelle 2 bzw. der mit ihr verbundenen Rastierhülse 4 in Umfangsrichtung verantwortlich ist.

Der in den Figuren 1a, 1b gezeigte Schaltfinger 5 ist mit dem Federelement 44 versehen, das aus der durchgehenden Bohrung 30, den zwei darin durch die Feder 32 auf Abstand voneinander gehaltenen Kugeln 31 besteht. Die Bohrung 30 ist dabei so ausgeführt, dass sie beidseitig im äußeren Bereich einen Durchmesser aufweist, der geringfügig kleiner als der Durchmesser der Kugeln 31 ist, so dass diese am Herausfallen aus dem Schaltfinger 5 gehindert sind. Dies kann beispielsweise durch eine Verstemmung erfolgen. Aus Figur 1b, die den geschalteten Zustand zeigt, ist ersichtlich, dass der Schaltfinger 5 beidseitig an den Wandungen 33 und 34 der Aufnahmeöffnung 6 anliegt, so dass linksseitig der Festkontakt 35 und rechtsseitig der angefederte Kontakt 36 gebildet ist. Wird nun über den Antriebsstrang eine Vibration des Mitnehmers 7 ausgelöst, so wird diese durch den angefederten Kontakt 36 gedämpft.

Die feste Arretierung des Schaltfingers 5 in der Aufnahmeöffnung 6 verringert, wie ausgeführt, einerseits auftretende Schwingungen, sorgt aber andererseits auch dafür, dass eine zusätzliche Arretierung der Schaltstange 8, in Form einer Kugelarretierung 13, wie aus Figur 5 ersichtlich, entbehrlich ist. Dies hat den Vorteil, dass bei der Bearbeitung des Getriebegehäuses 1 aufwendige Bearbeitungskapazität zur Befestigung eben jener Kugelarretierung 13 entbehrlich ist. Als weiterer Vorteil ist in diesem Zusammenhang zu sehen, dass durch die fehlenden Durchbrüche im Getriebegehäuse 1 für die nicht erforderlichen Kugelarretierungen 13 keine Dichtheitsprobleme auftreten können.

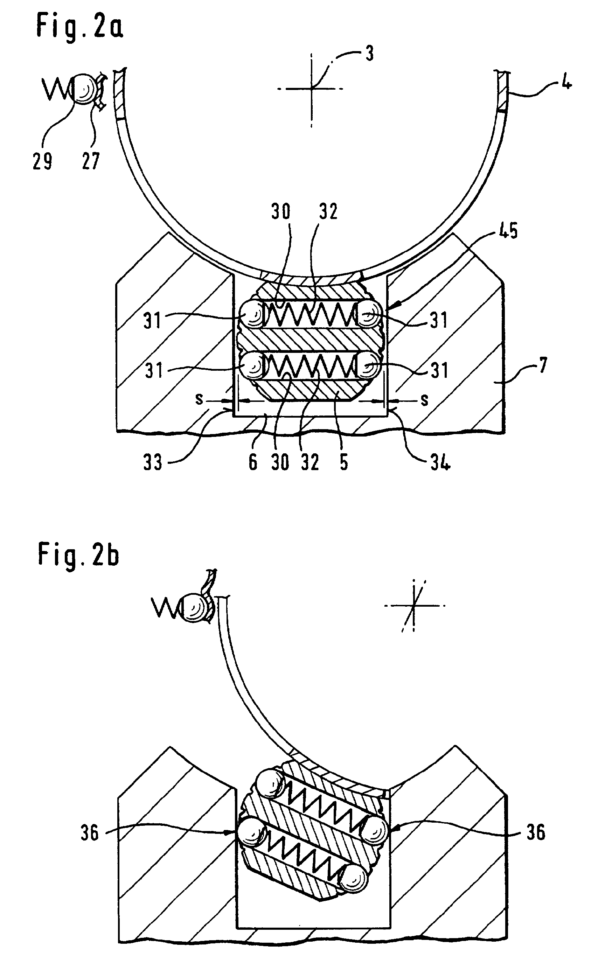

Der in den Figuren 2a und 2b gezeigte Schaltfinger 5 unterscheidet sich von dem gemäß Figuren 1a, 1b dadurch, dass er ein Federelement 45 aufweist, welches aus zwei übereinander angeordneten durchgehenden Bohrungen 30 besteht, in denen wiederum durch die Feder 32 voneinander beabstandete Kugeln 31 angeordnet sind, so dass sich im geschalteten Zustand gemäß Figur 2b an der linksseitigen und rechtsseitigen Wandung 33, 34 je ein angefederter Kontakt 36 ergibt.

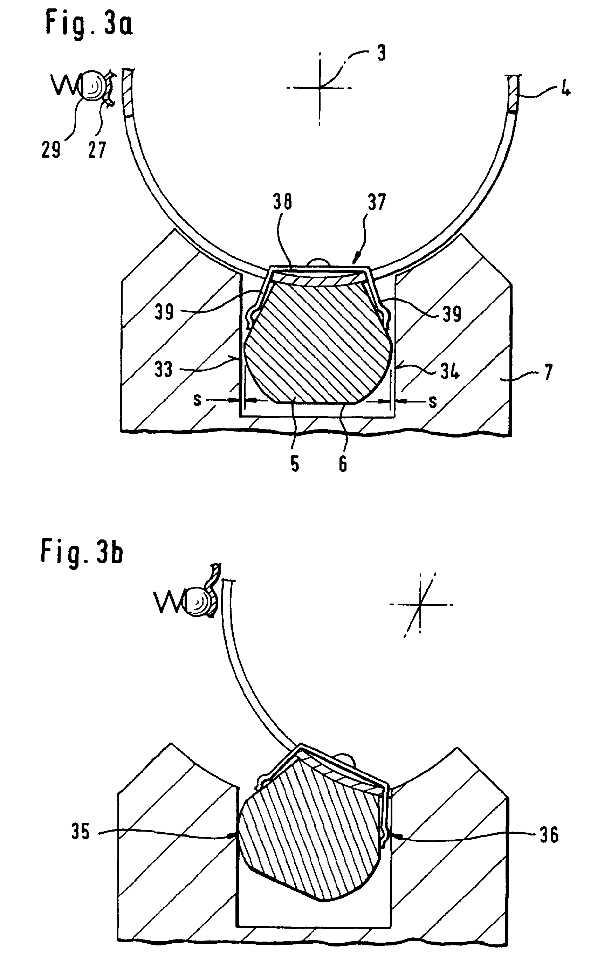

Gemäß den Figuren 3a und 3b ist der Schaltfinger 5 in der Aufnahmeöffnung 6 durch das auf diesen aufgesteckte Federelement 37 gehalten, dessen Basisteil 38 zwei abgewinkelte Schenkel 39 aufweist, die den Schaltfinger 5 zumindest teilweisen umschließen. Im geschalteten Zustand nach Figur 3b ist die Anlage von Schaltfinger 5 in der Aufnahmeöffnung 6 so realisiert, dass wiederum linksseitig der Festkontakt 35 und rechtsseitig der angefederter Kontakt 36 gebildet ist.

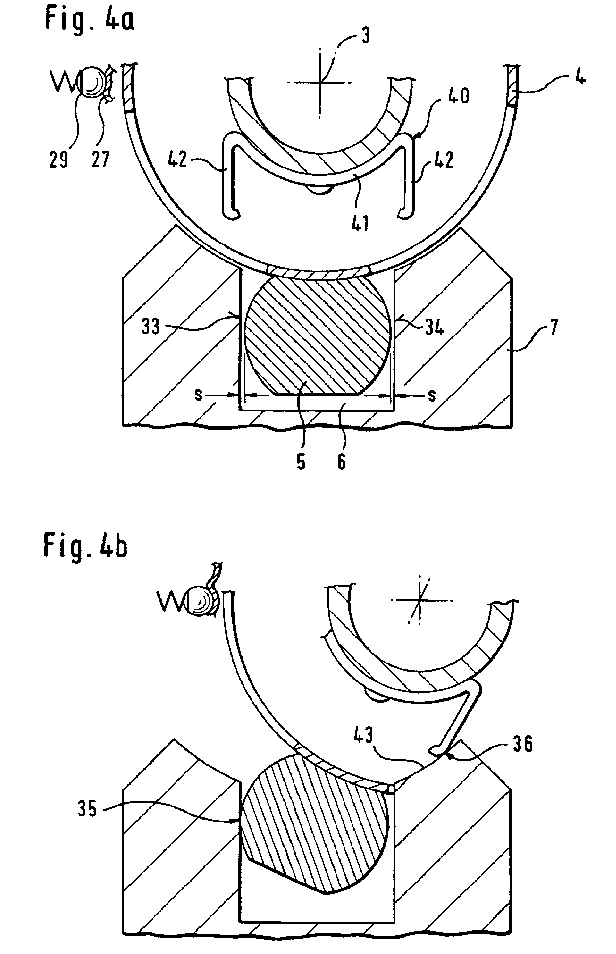

In den Figuren 4a und 4b schließlich ist das Federelement 40 auf die Rastierhülse 4 mit seinem halbkreisförmigen Basisteil 41 aufgesteckt, das beide Schenkel 42 miteinander verbindet. Im geschalteten Zustand gemäß Figur 4b liegt das Federelement 40 mit dem Schenkel 42 an einem Nachbarbereich 43 der Aufnahmeöffnung 6 an, so dass linksseitig wiederum der Festkontakt 35 und rechtsseitig der angefederte Kontakt 36 gebildet ist.

### Bezugszeichen

- 1: Getriebegehäuse
- 2: Schaltwelle
- 3: Achse
- 4: Rastierhülse
- 5: Schaltfinger
- 6: Aufnahmeöffnung
- 7: Mitnehmer
- 8: Schaltstange
- 9: Längsführung
- 10: Längsführung
- 11: Schaltgabel
- 12: Rastkontur
- 13: Kugelarretierung
- 14: Schaltstange
- 15: Schaltstange
- 16: Längsführung
- 17: Längsführung
- 18: Längsführung
- 19: Längsführung
- 20: Mitnehmer
- 21: Mitnehmer
- 22: Schaltgabel
- 23: Schaltgabel
- 24: Rastkontur
- 25: Rastkontur
- 26: Rastkontur
- 27: Rastkontur
- 28: Kugelarretierung
- 29: Kugelarretierung
- 30: durchgehende Bohrung
- 31: Kugel
- 32: Feder
- 33: Wandung
- 34: Wandung
- 35: Festkontakt
- 36: angefederter Kontakt
- 37: Federelement
- 38: Basisteil
- 39: Schenkel
- 40: Federelement
- 41: Basisteil
- 42: Schenkel
- 43: Nachbarbereich
- 44: Federelement
- 45: Federelement

## Patentansprüche

1. Schalteinrichtung für ein mehrgängiges Zahnräderwechselgetriebe eines Kraftfahrzeuges, bei der eine längsverschieblich und/oder schwenkbar in einem Getriebegehäuse (1) aufgenommene Schaltwelle (2) über einen mit ihr verbundenen Schaltfinger (5) in eine Aufnahmeöffnung (6) eines Mitnehmers (7,20,21) einer längsverschieblichen Schaltstange (8, 14, 15) eingreift, auf der eine Schaltgabel (11, 22, 23) angeordnet ist, die mit einer Schiebemuffe in Wirkverbindung steht, **dadurch gekennzeichnet, dass** im geschalteten Zustand der Schaltfinger (5) in der Aufnahmeöffnung (6) des Mitnehmers (7, 20, 21) beidseitig anliegt, wobei der Schaltfinger (5) wenigstens einen durch ein Federelement (44, 45, 37, 40) erzeugten angefederten Kontakt (36) aufweist.

2. Schalteinrichtung nach Anspruch 1, **dadurch gekennzeichnet, dass** der Schaltfinger (5) einen Festkontakt (35) und einen angefederten Kontakt (36) oder zwei angefederte Kontakte (36) aufweist.

3. Schalteinrichtung nach Anspruch 1, **dadurch gekennzeichnet, dass** das Federelement (44, 45, 37) im Bereich des Schaltfingers (5) angeordnet ist.

4. Schalteinrichtung nach Anspruch 3, **dadurch gekennzeichnet, dass** der Schaltfinger (5) mit wenigstens einer durchgehenden Bohrung (30) versehen ist, in der zwei durch eine Feder (32) voneinander beabstandete gegeneinander verschiebbare Kugeln (31) angeordnet sind, wobei im äußeren Bereich des Schaltfingers (5) der Durchmesser der Bohrung (30) geringer als der Durchmesser der Kugeln (31) ist und die Bohrung (30) innerhalb des Schaltfingers (5) so angeordnet ist, dass im geschalteten Zustand eine der Kugeln (31) an einer Wandung (34) der Aufnahmeöffnung (6) anliegt.

5. Schalteinrichtung nach Anspruch 3, **dadurch gekennzeichnet, dass** der Schaltfinger (5) mit zwei übereinander angeordneten durchgehenden Bohrungen (30) versehen ist, in denen zwei durch eine Feder (32) voneinander beabstandete gegeneinander verschiebbare Kugeln (31) angeordnet sind, wobei im äußeren Bereich des Schaltfingers (5) der Durchmesser der Bohrungen (30) geringer als der Durchmesser der Kugeln (31) ist und die Bohrungen (30) innerhalb des Schaltfingers (5) so angeordnet sind, dass im geschalteten Zustand je eine der Kugeln (31) an je einer Wandung (33,34) der Aufnahmeöffnung (6) anliegt.

6. Schalteinrichtung nach Anspruch 3, **dadurch gekennzeichnet, dass** das Federelement (37) im Querschnitt gesehen U-förmig ausgebildet ist, wobei ein auf den Schaltfinger (5) aufgestecktes Basisteil (38) zwei den Schaltfinger (5) zumindest teilweise umschließende Schenkel (39) verbindet, von denen einer im geschalteten Zustand an einer Wandung (34) der Aufnahmeöffnung (6) anliegt.

7. Schalteinrichtung nach Anspruch 3, **dadurch gekennzeichnet, dass** der Schaltfinger (5) mit einer umlaufenden Nut versehen ist, in die ein O-Ring eingesetzt ist.

8. Schalteinrichtung nach Anspruch 1, **dadurch gekennzeichnet, dass** das Federelement (40) außerhalb des Bereiches des Schaltfingers (5) angeordnet ist.

9. Schalteinrichtung nach Anspruch 8, **dadurch gekennzeichnet, dass** das Federelement (40) auf eine mit der Schaltwelle (2) verbundene Rastierhülse (4) aufgesteckt ist und aus einem einen Teil der Rastierhülse umschließenden halbkreisförmigen Basisteil (41) sowie zwei davon abgewinkelten Schenkeln (42) besteht, von denen einer im geschalteten Zustand an einem Nachbarbereich (43) der Aufnahmeöffnung (6) anliegt.
